# EUROPEAN PATENT SPECIFICATION

(11) **EP 1 824 723 B1**
(45) Date of publication and mention of the grant of the patent: **17.02.2010**
(21) Application number: 05856185.3
(22) Date of filing: 05.12.2005
(51) Int. Cl.: B62D 65/02, B62D 21/18, B62D 31/02, B62D 33/04

(54) **MODULAR PROCESS TO MANUFACTURE AND ASSEMBLE AUTOMOTIVE VEHICLE STRUCTURE, FOR PASSENGER AND LOAD TRANSPORTATION, AND RESULTING BODY AND CHASSIS**
MODULARES VERFAHREN ZUR HERSTELLUNG UND MONTAGE VON KRAFTFAHRZEUGSTRUKTUR ZUR PERSONEN- ODER LASTENBEFÖRDERUNG UND DARAUS RESULTIERENDE/S KAROSSERIE UND CHASSIS
PROCESSUS MODULAIRE POUR LA FABRICATION ET L'ASSEMBLAGE D'UNE STRUCTURE DE VEHICULE AUTOMOBILE, DESTINEE AU TRANSPORT DE PASSAGERS ET DE CHARGES, ET CORPS ET CHASSIS ASSOCIES

(30) Priority: 13.12.2004 BR PI0405594
(43) Date of publication of application: 29.08.2007
(73) Proprietor: Marcopolo S/A, Caxias do Sul/RS, 95.086-200 (BR); Edson Dalle Molle, Mainieri, Caxias do Sul/RS, 95030-380 (BR)
(72) Inventor: Marcopolo S/A, Caxias do Sul/RS, 95.086-200 (BR); Edson Dalle Molle, Mainieri, Caxias do Sul/RS, 95030-380 (BR)
(74) Representative: Fernandez Lerroux, Aurelio
(86) International application number: PCT/BR2005/000252
(87) International publication number: WO 2006/076784

(56) References cited:
- EP-A- 0 864 483
- DE-A1- 2 113 433
- DE-A1- 2 117 940
- FR-A- 965 441
- GB-A- 712 917
- GB-A- 2 007 324
- JP-A- 9 295 587
- NL-C2- 1 001 262
- NL-C2- 1 001 262

## Description

The present invention relates to the development of a modular process to manufacture and assemble an automotive vehicle structure, for passenger and load transportation, and resulting body.

There are, currently in the art, buses, midibuses, microbuses, mini-buses, manufactured with a metallic structure distributed along their extension, composing structural rings, and internally and externally coated with plastic and metallic materials and woods. Consequently, this system has an inconvenient complex assembly process, comprising templates and devices preparation along assembly, resulting in high financial investment for it to be built, in addition to a large building area. The current process also uses chemical products in the production line, such as anticorrosive agents and thermal treatments as body isolation, which are highly toxic and harmful to health, generating a large amount of non-recyclable residues harmful to the environment.

Another aggravating factor in the current manufacturing process is the complex metallic structure used, resulting in a very heavy vehicle. The tubular structure, or structure formed by profiles conformed in several shapes, "U", "C", among others, of vehicles in the known system, requires angle cuts in some points, which are weld-jointed, and also require sanding on those weld points. Thus, high noise level and gases emission are generated in the work environment, impairing workers health and greatly reducing manufacturing productivity, considering the previously described welding and sanding steps.

Displacing, storing and moving the large amount of parts during the manufacturing and assembly process is difficulty, representing, thus another inconvenience, as the parts feature complex geometric shapes with large dimensions.

Prior art examples are DE 2117940 (Vittorio Veneto) and EP 864483 (Fokker Special Products).

DE 2117940 discloses a rear engined omnibus chassis, formed by two upper and two lower longitudinal bearers parallel to each other, whose aim is to provide the structure for a rear engine, but it does not describe a modular construction as proposed.

EP 864483 discloses a vehicle construction using sandwich panels to obtain a low flat loading deck, but it does not describe the modular construction as proposed and it does not describe the fixing method, such as welding, avoided by present invention.

The object of the present invention effectively overcomes the limitations found in the existing manufacturing process of the automotive vehicle for passenger and load transportation, previously described. That is achieved by means of a new conception for modular bodies construction, comprising a modular structure on an automotive vehicle chassis, with an assembly process allowing effective bodies manufacturing by means of a panels joining procedure, using as few components as possible. The novel modular process to manufacture and assemble an automotive vehicle structure is able to allow dynamic and fast manufacturing, not requiring welding upon components joining, featuring a totally modular structure, joint by screws, rivets, chemical lock or fitting systems.

The following are advantages of the present invention, when compared to the known manufacturing process and bodies:
A) works tubes with plain cut;
B) does not require any welding point in the assembly line;
C) as there is no welding, no sanding is required;
D) does not expose operators to gases from welding;
E) as it does not require welding or sanding, industrial waste is reduced;
F) due to reduced parts size, productivity grows;
G) the reduction in the size of the parts to be produced makes it easier to move and store them upon transportation inside and outside the plant;
H) reduces steps in the manufacturing process.

In order to allow full understanding of the proposed modular process and the resulting body, object of the present invention, it is herein described in detail, based on the following figures:

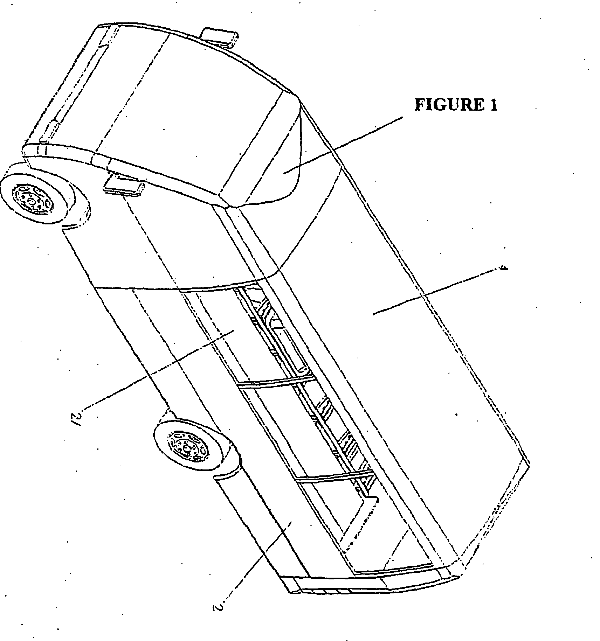

Figure 1 - body perspective;

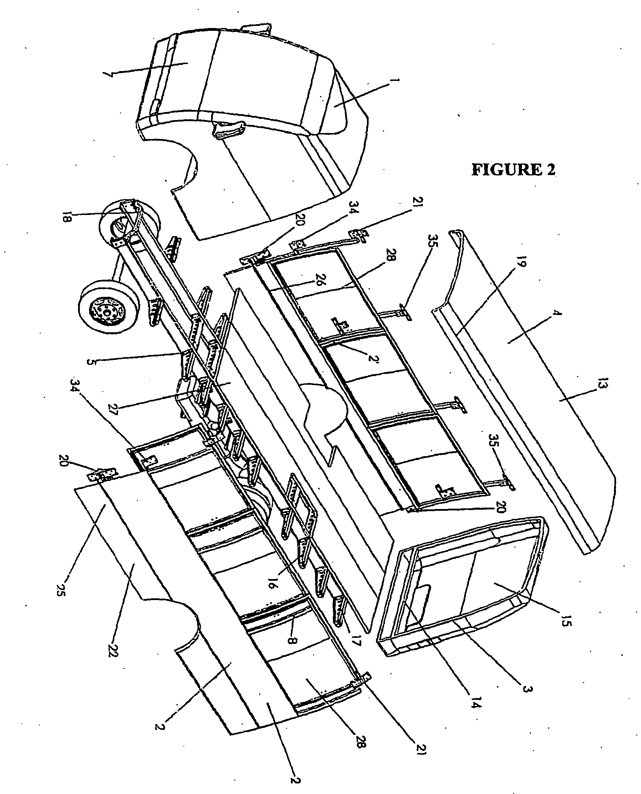

Figure 2 - body exploded view;

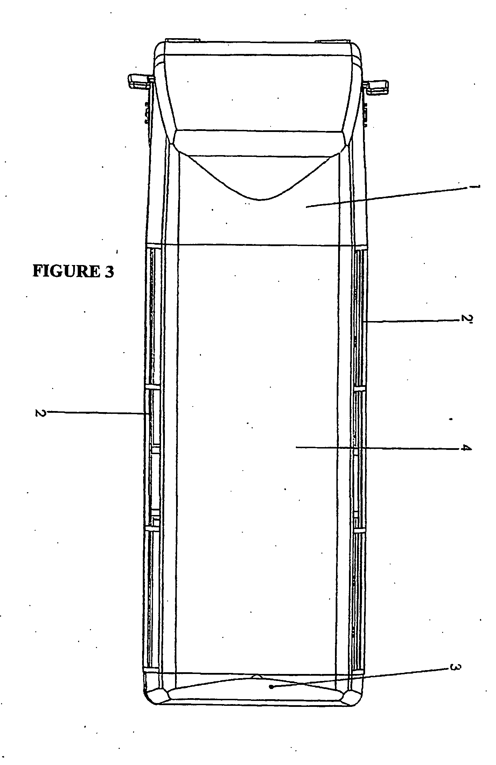

Figure 3 - body upper view;

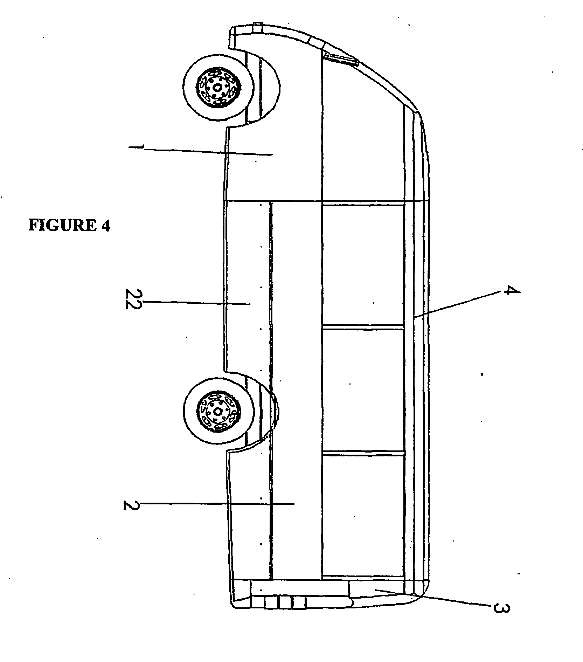

Figure 4 - body side view;

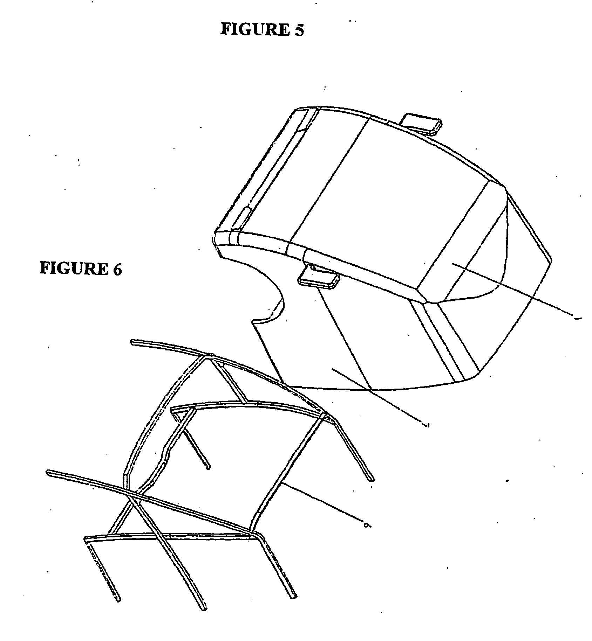

Figure 5 - perspective of the body front module;
Figure 6 - perspective of the body front module tubular structure;

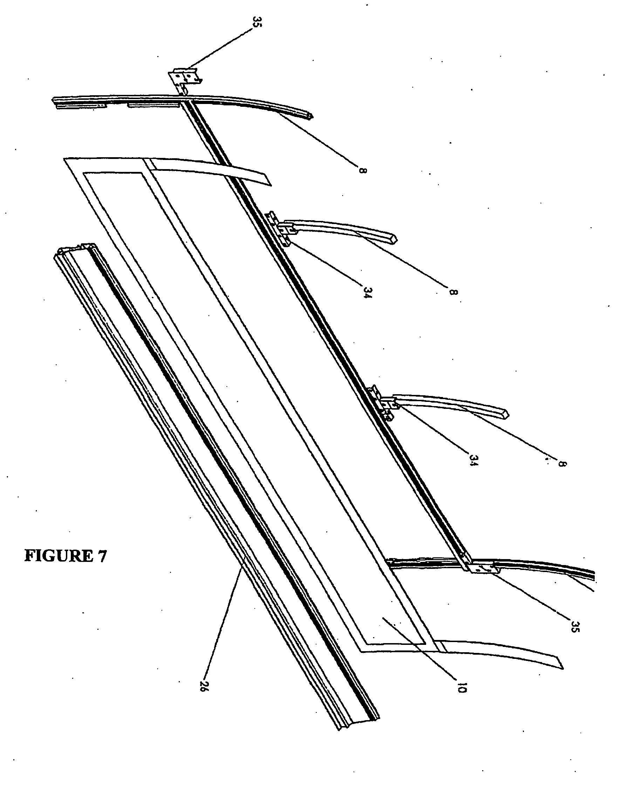

Figure 7 - exploded perspective of the body side module;

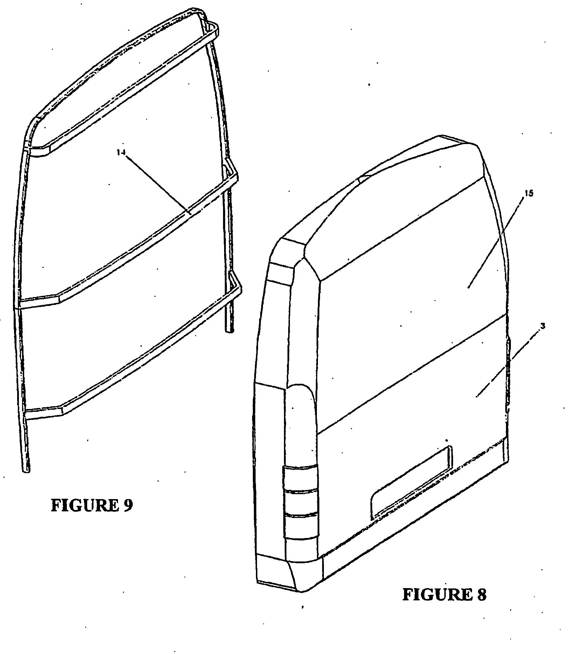

Figure 8 - perspective of the rear body module;
Figure 9 - perspective of the body rear module tubular structure;

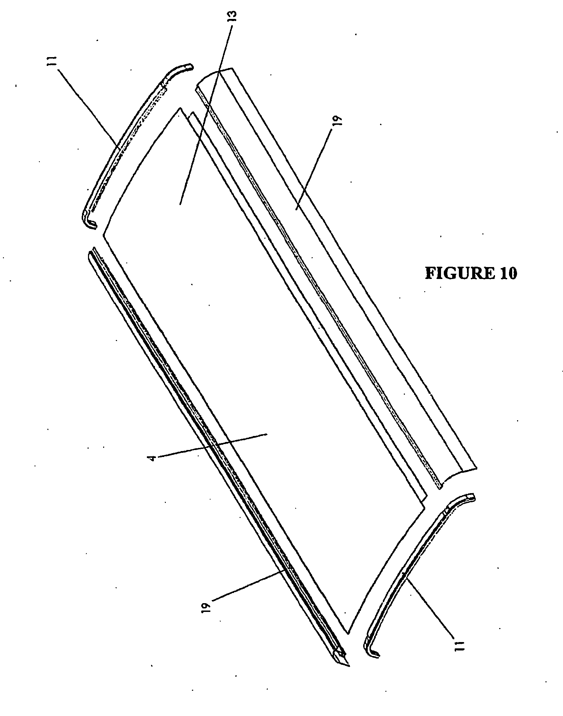

Figure 10 - exploded perspective of the body ceiling;

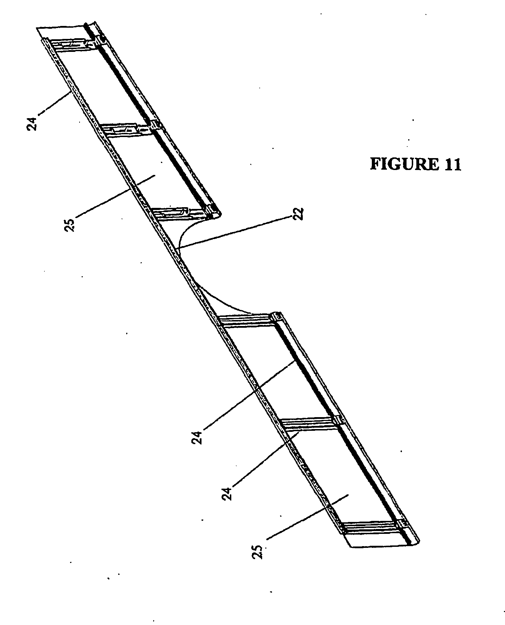

Figure 11 - perspective of the body lower side skirt modules;

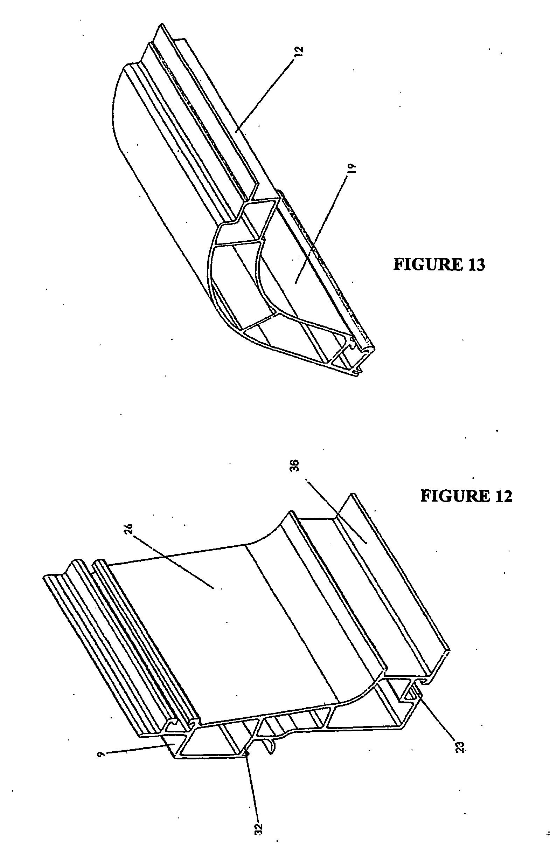

Figure 12 - perspective of the body side structure profile;
Figure 13 - perspective of the body ceiling structure profile;

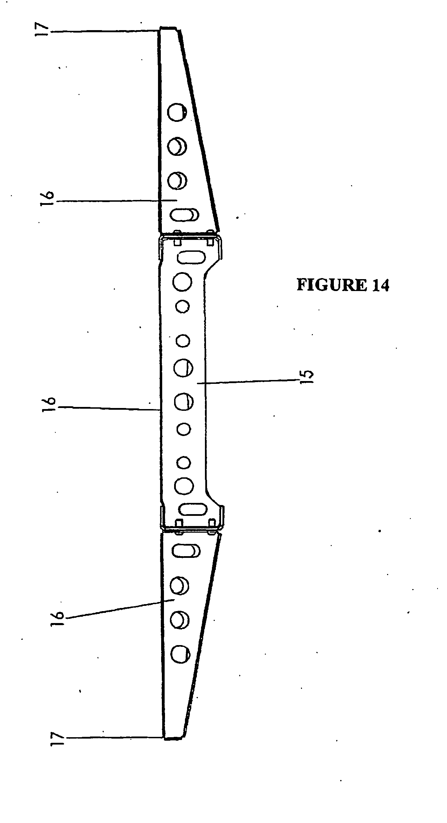

Figure 14 - front view of chassis and components;

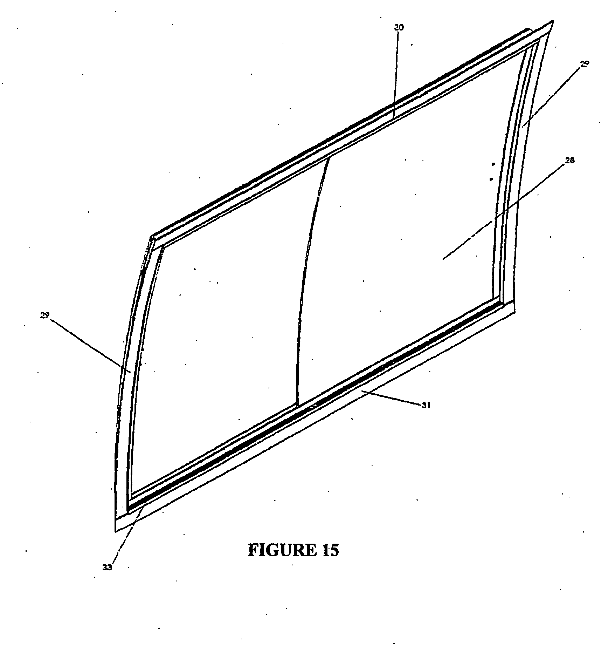

Figure 15 - window perspective;

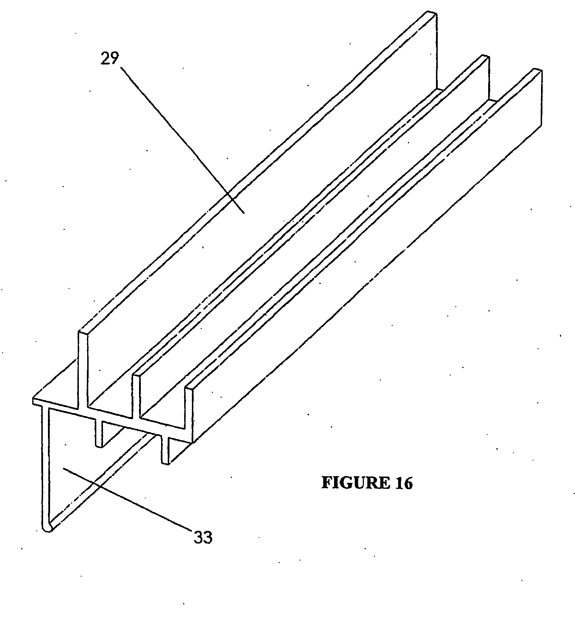

Figure 16 - window side profiles perspective;

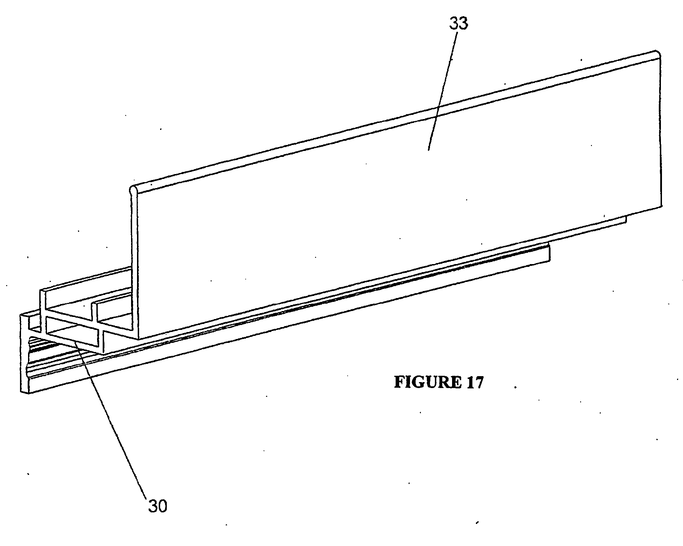

Figure 17 - window upper profile perspective;

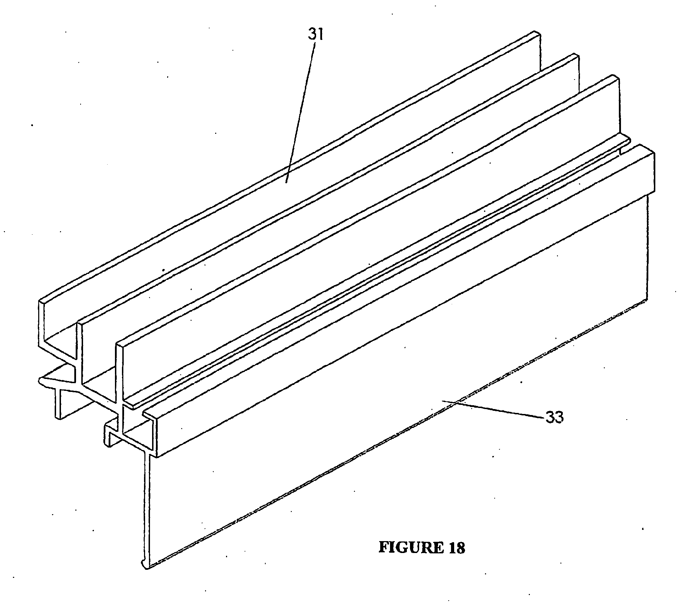

Figure 18 - window lower profile perspective;

The modular manufacturing process for the proposed body, object of the present descriptive report, comprises separate manufacturing of front, side, ceiling, rear, skirt, floor and windows modules. At first, there is a first vehicle front module (1) assembly step, comprising a structure (6), manufactured from metallic profiles distributed according to their functions, aiming at providing as much mechanical strength to the assembly as possible. The front module (1) is entirely covered with fiber plates, ferrous and non-ferrous material, wood or plastic (7), or compatible material, allowing thereinafter the specific external drawing of the vehicle front body, as well as other parts of the assembly, such as driver post, windshield, doors, rear-view mirror, external hood and internal cover, as a front panel, held in place by means of screwed, riveted, glued devices, using also as an alternative, components fixation with adhesive tape. The procedure that follows relates to left and right sides (2) and (2') assembly, manufactured from metallic profiles (8) and (26), provided with an area (9) to allow fast fitting of modules (10), whose structure is characterized in that their internal and external faces are already painted with the vehicle color. Thus, it is possible to get, with the modules (10), to the assembly line both with the cocoon interior and the body external face already painted. Thereafter, the ceiling (4) is assembled, which is formed from a structure made of profiles (11) and curve profile (19), which is provided with rims (12), to allow fast module (13) fitting, this latter having the same structure and characteristic of modules (10), allowing, thus, simultaneous finishing to the ceiling (4) internal and external structure. Thereafter, there is the vehicle rear module (3) assembly, which comprises a structure (14) manufactured from metallic profiles, distributed according to their functions, aiming at providing as much mechanical strength to the assembly as possible. The rear module (3), among other parts that may result from this assembly, is entirely covered with fiber plates, ferrous and non-ferrous material, wood or plastic (15), or compatible material, allowing thereinafter the specific external drawing of the vehicle rear body. This rear module (3) comprises rear signalers, inspection port, porthole for baggage and internal finishing. Thereafter, there is the lower side skirt (22) assembly, comprising a tubular structure (24) and modules (25), covered with fiber, ferrous and nonferrous material, wood or plastic plates. There is also the windows assembly (28), comprising a side (29), upper (30) and lower (31) profiles structure, provided with finishing rims (33).

The whole structure described above is assembled on a chassis (5), which is provided with tripartite cross members (16), with slots (17) on the upper end, to receive a joining screw for the profile (23) rails (26) and cushion (18).

In the assembly line there is the merely illustrative and preferential sequence for joining and assembling the modules described above, in which the modules described above are fixed on a chassis (5), provided with cross members (16), distributed in three segments, with slots (17) on their upper end, starting from the vehicle front module (1) fixation on the cushion (18), the chassis (5), with screws, rivets or a gluing process. Thereafter, sides (2) and (2') are mounted on the chassis (5), fixed by means of tripartite cross members (16), slots (17) joint by a joining screw to the rail (23) existing in the profile (26) of sides (2) and (2'), held also by structural components (20), (21), (34) and (35), and joint to front module (1) by means of screws, rivets or a gluing process. Thereafter, the ceiling (4) is fixed to sides (2) and (2'), by means of curve profile (19), which is provided with fitting areas (12) and curve structural elements (21) on their ends, as well as their joining to the vehicle front module (1), by means of screws, rivets or a gluing process. As the following procedure, there is the rear module (3) joining to sides (2) and (2') and to ceiling (4), by means of structural components (20) and curve structural elements (21). Also as a way to allow full finishing of the modular structure for the proposed vehicle body, there is the lower side skirt (22) assembly next to sides (2) and (2'), by means of profile (26), which is provided with a side rim (32). The lower side skirt (22) comprises a tubular structure (24) and modules (25). Thereafter, there is the floor (27) assembly inside the structure described, comprising modules with the same features of modules (10) and (13), allowing simultaneous internal finishing of the cocoon and external of the body, mounted on chassis (5) and cross member (16), held to lower rim (36) of profile 26. At last, there is the windows (28) assembly, which comprise a structure formed by side (29), upper (30) and lower (31) profiles, joint by means of structural components (35) with shapes similar to letter "L", and (34), with shapes similar to letter "T". The already assembled windows (28), with the respective glasses, are characterized in that their assembly process occurs from inside the "cocoon" (body) outwards, providing, by means of side (29), upper (30) and lower (31) profiles and respective finishing rims (33), perfect internal finishing on sides (2) and (2'), and to the respective panels (10).

The resulting body has a modular structure comprising a front module (1), sides (2) and (2'), ceiling (4), rear module (3), chassis (5), lower skirt (22), floor (27) and windows (28), joint by means of screws, rivets or a gluing process, as well as by metallic profiles (26), provided with rim (9), side rim (32) and rail (23), by curve profile (19), which is provided with fitting areas (12), by structural components (20) and curve structural elements (21) and structural components (35) and (34).

The present descriptive report relates to a peculiar and original productive process for manufacturing and modular assembly of automotive vehicle structure, for passenger and load transportation, establishing a new conception for constructing bodies, using as few components as possible.

## Claims

1. "MODULAR PROCESS TO MANUFACTURE AND ASSEMBLE AUTOMOTIVE VEHICLE STRUCTURE, FOR PASSENGER AND LOAD TRANSPORTATION", whereby a chassis (5) receives, following a merely illustrative order, a front module (1) on a cushion (18), sides (2) and (2'), fixed on chassis (5) by means of tripartite cross members (16) and slots (17), joint by a joining screw to a rail (23) existing in a profile (26) of sides (2) and (2') and structural components (20), joint to said front module (1) by means of screws, rivets or a gluing process; a ceiling (4) is fixed to said sides (2) and (2') by means of curve profile (19) and its fitting area (12) and by curve structural elements (21), joint to said front module (1) of the vehicle, by means of screws, rivets or a gluing process; a rear module (3) is fixed to said sides (2) and (2') and said ceiling (4), by means of structural components (20) and curve structural elements (21); a lower side skirt (22) is fixed to sides (2) and (2'), by means of side rim (32) existing in said profile (26); at last, a floor (27) is mounted on tripartite cross members (18) of said chassis (5), and held to lower rim (36) of said profile (26) by means of a screw; the full finishing of the structure is made by means of windows (28) assembly, which comprise a structure formed by side (29), upper (30) and lower (31) profiles, joint by means of structural components (35) with shapes similar to letter "L" and (34) shapes similar to letter "T", with the respective glasses, mounted inside the structure from inside the "cocoon" outwards, providing, by means of side (29), upper (30) and lower (31) profiles and respective finishing rims (33), perfect finishing for sides (2) and (2') and respective panels (10).

2. "MODULAR PROCESS TO MANUFACTURE AND ASSEMBLE AUTOMOTIVE VEHICLE STRICTURE, FOR PASSENGER AND LOAD TRANSPORTATION", as recited in claim 1, **characterized in that** there is a front module (1), comprising a structure (6), manufactured from metallic profiles distributed according to their functions, entirely covered with fiber plates (7) or compatible material, allowing thereinafter the specific external drawing of the vehicle front body, as well as driver post, windshield, doors, rear-view mirror, external hood and internal cover, as a front panel, held in place by means of screwed, riveted, glued devices, using also as an alternative, components fixation with adhesive tape.

3. "MODULAR PROCESS TO MANUFACTURE AND ASSEMBLE AUTOMOTIVE VEHICLE STRUCTURE, FOR PASSENGER AND LOAD TRANSPORTATION", as recited in claim 1, **characterized in that** left and right (2) and (2') sides are manufactured from metallic profiles (8) and profile (26) provided with a side rim (32), rail (23) and area (9), and lower rim (36), to allow fast fitting of modules (10).

4. "MODULAR PROCESS TO MANUFACTURE AND ASSEMBLE AUTOMOTIVE VEHICLE STRUCTURE, FOR PASSENGER AND LOAD TRANSPORTATION", as recited in claim 3, **characterized in that** modules (10) have their internal and external faces already painted with the vehicle color, allowing simultaneous finishing in the cocoon inner face and the body outer face.

5. "MODULAR PROCESS TO MANUFACTURE AND ASSEMBLE AUTOMOTIVE VEHICLE STRUCTURE, FOR PASSENGER AND LOAD TRANSPORTATION", as recited in claim 1, **characterized in that** the ceiling (4) is formed from a structure made of profiles (11) and curve profile (19) provided with rims (12) to allow fast fitting the module (13).

6. "MODULAR PROCESS TO MANUFACTURE AND ASSEMBLE AUTOMOTIVE VEHICLE STRUCTURE, FOR PASSENGER AND LOAD TRANSPORTATION", as recited in claim 5, **characterized in that** the module (13) allows simultaneous finishing of the internal and external structure of the vehicle ceiling (4).

7. "MODULAR PROCESS TO MANUFACTURE AND ASSEMBLE AUTOMOTIVE VEHICLE STRUCTURE, FOR PASSENGER AND LOAD TRANSPORTATION", as recited in claim 1, **characterized in that** the vehicle rear module (3) is formed by a structure (14), manufactured from metallic profiles, distributed according to their functions, entirely covered with fiber plates (15) or compatible material, allowing thereinafter the specific external drawing of the vehicle rear body, comprising rear signalers, inspection port, porthole for baggage and internal finishing.

8. "MODULAR PROCESS TO MANUFACTURE AND ASSEMBLE AUTOMOTIVE VEHICLE STRUCTURE, FOR PASSENGER AND LOAD TRANSPORTATION", as recited in claim 1, **characterized in that** it comprises a lower side skirt (22), comprising a tubular structure (24) and modules (25) covered with fiber plates, ferrous, non-ferrous material, wood or plastic.

9. "MODULAR PROCESS TO MANUFACTURE AND ASSEMBLE AUTOMOTIVE VEHICLE STRUCTURE, FOR PASSENGER AND LOAD TRANSPORTATION", as recited in claim 1, **characterized in that** the floor (27), mounted inside the described structure, comprises modules with the same features as modules (10) and (13), allowing simultaneous internal finishing of the cocoon and external of the body, mounted on chassis (5) and cross member (16), also held next to the lower rim (36) of profile (26).

10. "MODULAR PROCESS TO MANUFACTURE AND ASSEMBLE AUTOMOTIVE VEHICLE STRUCTURE, FOR PASSENGER AND LOAD TRANSPORTATION", as recited in claim 1, **characterised in that** it comprises windows (28), formed by a structure of side (29), upper (30) and lower (31) profiles, joint by means of structural components (35), with shapes similar to letter "L" and (34) with shapes similar to letter "T", provided with finishing rims (33).

11. "MODULAR PROCESS TO MANUFACTURE AND ASSEMBLE AUTOMOTIVE VEHICLE STRUCTURE, FOR PASSENGER AND LOAD TRANSPORtATION", as recited in claim 1, **characterized in that** it comprises a chassis (5), provided with tripartite cross members (16), with slots (17) on its upper end, and cushion (18).

## Patentansprüche

1. Modulares Verfahren zum Herstellen und Zusammenbauen einer Kraftfahrzeugstruktur zum Passagier- und Lasttransport, wobei ein Fahrgestell (5) nach einer rein anschaulichen Reihenfolge Folgendes aufnimmt: ein Frontmodul (1) auf einem Dämpfer (18), Seiten (2) und (2'), die auf dem Fahrgestell (5) durch dreiteilige Querelemente (16) und Nute (17) befestigt sind, die durch eine Verbindungsschraube mit einer in einem Profil (26) der Seiten (2) und (2') vorhandenen Schiene (23) verbunden sind, und Bauteile (20), die mit dem genannten Frontmodul (1) durch Schrauben, Niete oder einen Klebeprozess verbunden sind; wobei eine Decke (4) an den genannten Seiten (2) und (2') durch ein gekrümmtes Profil (19) und seinen Einpassbereich (12) und durch gekrümmte Bauelemente (21) befestigt wird, die mit dem genannten Frontmodul (1) des Fahrzeugs durch Schrauben, Niete oder einen Klebeprozess verbunden sind; wobei ein hinteres Modul (3) an den genannten Seiten (2) und (2') und der genannten Decke (4) durch Bauteile (20) und gekrümmte Bauelemente (21) befestigt wird; wobei eine untere Seitenrandleiste (22) an den Seiten (2) und (2') durch den in dem genannten Profil (26) vorhandenen Seitenrand (32) befestigt wird; wobei schließlich ein Boden (27) auf dreiteiligen Querelementen (16) des genannten Fahrgestells (5) montiert, und an dem unteren Rand (36) des genannten Profils (26) durch eine Schraube gehalten wird; wobei der vollständige Abschluss der Struktur durch eine Anordnung von Fenstern (28) bewerkstelligt wird, welche eine durch seitliche (29), obere (30) und untere (31) Profile gebildete Struktur umfassen, welche durch "L"-förmige (35) und "T"-förmige (34) Bauteile verbunden sind, wobei die jeweiligen Gläser innerhalb der Struktur aus dem Inneren der "Kabine" nach Außen montiert sind, wobei durch die seitlichen (29), oberen (30) und unteren (31) Profile und jeweiligen Abschlussränder (33) ein perfekter Abschluss für die Seiten (2) und (2') und jeweilige Paneele (10) bereitgestellt wird.

2. Modulares Verfahren zum Herstellen und Zusammenbauen einer Kraftfahrzeugstruktur zum Passagier- und Lasttransport nach Anspruch 1, **dadurch gekennzeichnet, dass** ein Frontmodul (1) vorhanden ist, das eine Struktur (6) umfasst, die aus metallischen Profilen hergestellt ist, die ihren Funktionen entsprechend verteilt und vollständig mit Faserplatten (7) oder kompatiblen Material bedeckt sind, wobei später ein spezifisches äußeres Herausziehen des Fahrzeugfrontkörpers, sowie des Fahrerstands, der Windschutzscheibe, der Türen, des Rückspiegels, der äußeren Motorhaube und der inneren Abdeckung, als Frontpaneel ermöglicht wird, die durch verschraubte, genietete, verklebte Einrichtungen, auch unter Nutzung einer Bauteilebefestigung mit Klebeband als Alternative, in Lage gehalten werden.

3. Modularer Prozess zum Herstellen und Zusammenbauen einer Kraftfahrzeugstruktur zum Passagier- und Lasttransport nach Anspruch 1, **dadurch gekennzeichnet, dass** die linken (2) und rechten (2') Seiten aus metallischen Profilen (8) und dem Profil (26) hergestellt werden, das mit einem Seitenrand (32), der Schiene (23) und dem Bereich (9), und dem unteren Rand (36) versehen ist, um ein schnelles Einpassen der Module (10) zu ermöglichen.

4. Modulares Verfahren zum Herstellen und Zusammenbauen einer Kraftfahrzeugstruktur zum Passagier- und Lasttransport nach Anspruch 3, **dadurch gekennzeichnet, dass** die inneren und äußeren Seiten der Module (10) bereits mit der Fahrzeugfarbe angestrichen sind, wobei ein simultaner Abschluss in der Kabineninnenseite und der Körperaußenseite ermöglicht wird.

5. Modulares Verfahren zum Herstellen und Zusammenbauen einer Kraftfahrzeugstruktur zum Passagier- und Lasttransport nach Anspruch 1, **dadurch gekennzeichnet, dass** die Decke (4) aus einer Struktur gebildet wird, die aus Profilen (11) und einem gekrümmten Profil (19) hergestellt ist, die mit Rändern (12) versehen sind, um ein schnelles Einpassen des Moduls (13) zu ermöglichen.

6. Modulares Verfahren zum Herstellen und Zusammenbauen einer Kraftfahrzeugstruktur zum Passagier- und Lasttransport nach Anspruch 5, **dadurch gekennzeichnet, dass** das Modul (13) einen simultanen Abschluss der inneren und äußeren Struktur der Fahrzeugdecke (4) ermöglicht.

7. Modulares Verfahren zum Herstellen und Zusammenbauen einer Kraftfahrzeugstruktur zum Passagier- und Lasttransport nach Anspruch 1, **dadurch gekennzeichnet, dass** das hintere Fahrzeugmodul (3) durch eine Struktur (14) gebildet ist, die aus metallischen Profilen hergestellt ist, die ihren Funktionen entsprechend verteilt und vollständig mit Faserplatten (15) oder kompatiblem Material bedeckt sind, wobei später ein spezifisches äußeres Herausziehen des hinteren Fahrzeugkörpers ermöglicht wird, der hintere Signalgeber, eine Schauöffnung, eine Gepäckluke und einen internen Abschluss umfasst.

8. Modulares Verfahren zum Herstellen und Zusammenbauen einer Kraftfahrzeugstruktur zum Passagier- und Lasttransport nach Anspruch 1, **dadurch gekennzeichnet, dass** es eine untere Seitenrandleiste (22) umfasst, die eine röhrenförmige Struktur (24) und Module (25) umfasst, die mit Faserplatten, eisenhaltigem und eisenfreiem Material, Holz oder Kunststoff bedeckt sind.

9. Modulares Verfahren zum Herstellen und Zusammenbauen einer Kraftfahrzeugstruktur zum Passagier- und Lasttransport nach Anspruch 1, **dadurch gekennzeichnet, dass** der Boden (27), der innerhalb der beschriebenen Struktur montiert ist, Module mit denselben Merkmalen wie die Module (10) und (13) umfasst, wobei ein simultaner innerer Abschluss der Kabine und des Fahrzeugäußeren ermöglicht wird, die auf dem Fahrgestell (5) und dem Querelement (16) montiert, und auch neben dem unteren Rand (36) des Profils (26) gehalten sind.

10. Modulares Verfahren zum Herstellen und Zusammenbauen einer Kraftfahrzeugstruktur zum Passagier- und Lasttransport nach Anspruch 1, **dadurch gekennzeichnet, dass** es ein Fenster (28) umfasst, das durch eine Struktur aus seitlichen (29), oberen (30) und unteren (31) Profilen gebildet ist, die durch "L"-förmige (35) und "T"-förmige (34) Bauteile (35) verbunden sind, die mit Abschlussrändern (33) versehen sind.

11. Modulares Verfahren zum Herstellen und Zusammenbauen einer Kraftfahrzeugstruktur zum Passagier- und Lasttransport nach Anspruch 1, **dadurch gekennzeichnet, dass** es ein Fahrgestell (5) umfasst, das mit dreiteiligen Querelementen (16) mit Nuten (17) auf ihrem oberen Ende und einem Dämpfer (18) versehen ist.

## Revendications

1. Procédé modulaire pour fabriquer et assembler une structure de véhicule automoteur pour le transport de passagers et chargement, dans lequel un châssis (5) reçoit, en suivant un ordre purement illustratif, un module (1) frontal sur un amortisseur (18), des côtés (2) et (2'), fixés sur le châssis (5) au moyen d'éléments (16) transversaux tripartites et des rainures (17), unis au moyen d'une vis d'union à un rail (23) existant dans un profil (26) de côtés (2) et (2') et des composants (20) structuraux, unis audit module (1) frontal au moyen de vis, rivets ou un procédé de collage; un toit (4) est fixé auxdits côtés (2) et (2') au moyen d'un profil (19) courbé et sa zone (12) d'ajustage et au moyen d'éléments (21) structuraux courbés, unis audit module (1) frontal du véhicule, au moyen de vis, rivets ou un procédé de collage; un module (3) arrière est fixé audits côtés (2) et (2') et audit toit (4), au moyen de composants (20) structuraux et d'éléments (21) structuraux courbés ; une jupe (22) latérale inférieure est fixée aux côtés (2) et (2'), au moyen d'un bord (32) latéral existant dans ledit profil (26); finalement, un sol (27) est monté sur des éléments (16) transversaux tripartites dudit châssis (5), et est assuré au bord (36) inférieur dudit profil (26) au moyen d'une vis; le finissage complet de la structure est réalisé au moyen de l'assemblage des fenêtres (28), qui comprennent une structure formée par des profils latéraux (29), supérieurs (30) et inférieurs (31), unis au moyen de composants structuraux avec des formes similaires à la lettre "L" (35) et des formes similaires à la lettre "T" (34), avec les vitres respectifs montés dans la structure depuis l'intérieur de la "cabine" vers l'extérieur, en fournissant, au moyen de profils latéraux (29), supérieurs (30) et inférieurs (31) et des bords (33) de finissage respectifs, un finissage parfait pour les côtés (2) et (2') et des panneaux (10) respectifs.

2. Procédé modulaire pour fabriquer et assembler une structure de véhicule automoteur pour le transport de passagers et chargement, selon la revendication 1, **caractérisé en ce qu'**il y a un module (1) frontal qui comprend une structure (6), fabriquée à partir de profils métalliques distribués selon leurs fonctions, couverts complètement par des plaques (7) de fibre ou de matière compatible, qui permet postérieurement l'extraction externe spécifique du corps frontal du véhicule, ainsi que le poste du conducteur, le pare-brise, les portières, le rétroviseur intérieur, le capot extérieur et l'habillage interne, comme un panneau frontal, assuré à sa place au moyen de dispositifs vissés, rivetés, collés, en utilisant également comme alternative, la fixation de composants avec du ruban adhésif.

3. Procédé modulaire pour fabriquer et assembler une structure de véhicule automoteur pour le transport de passagers et chargement, selon la revendication 1, **caractérisé en ce que** des côtés gauche (2) et droit (2') sont fabriqués à partir de profils (8) métalliques et le profil (26) pourvu d'un bord (32) latéral, un rail (23) et une zone (9), et un bord (36) inférieur, pour permettre l'ajustage rapide des modules (10).

4. Procédé modulaire pour fabriquer et assembler une structure de véhicule automoteur pour le transport de passagers et chargement, selon la revendication 3, **caractérisé en ce que** les faces internes et externes des modules (10) sont déjà peintes avec la couleur du véhicule, en permettant le finissage simultané sur la face intérieur de la cabine et la face extérieure du corps.

5. Procédé modulaire pour fabriquer et assembler une structure de véhicule automoteur pour le transport de passagers et chargement, selon la revendication 1, **caractérisé en ce que** le toit (4) est formé à partir d'une structure fabriquée à partir de profils (11) et le profil (19) courbé pourvu de bords (12) pour permettre l'ajustage rapide du module (13).

6. Procédé modulaire pour fabriquer et assembler une structure de véhicule automoteur pour le transport de passagers et chargement, selon la revendication 5, **caractérisé en ce que** le module (13) permet le finissage simultané de la structure interne et externe du toit (4) du véhicule.

7. Procédé modulaire pour fabriquer et assembler une structure de véhicule automoteur pour le transport de passagers et chargement, selon la revendication 1, **caractérisé en ce que** el module (3) arrière du véhicule est formé par une structure (14), fabriquée à partir de profils métalliques, distribués selon leurs fonctions, couverts complètement par des plaques (15) de fibre o matière compatible, qui permet postérieurement l'extraction externe spécifique du corps arrière du véhicule, comprenant des indicateurs arrière, un regard d'inspection, un hublot pour des bagages et un finissage interne.

8. Procédé modulaire pour fabriquer et assembler une structure de véhicule automoteur pour le transport de passagers et chargement, selon la revendication 1, **caractérisé en ce qu'**il comprend une jupe (22) latérale inférieure, qui comprend une structure (24) tubulaire et des modules (25) couverts par des plaques de fibre, matière ferrée, non ferrée, bois ou plastique.

9. Procédé modulaire pour fabriquer et assembler une structure de véhicule automoteur pour le transport de passagers et chargement, selon la revendication 1, **caractérisé en ce que** le sol (27), monté dans la structure décrite, comprend des modules avec les mêmes caractéristiques que les modules (10) et (13), qui permettent le finissage interne simultané de la cabine et de l'extérieur du corps, montés sur le châssis (5) et l'élément (16) transversal, aussi assurés à côté du bord (36) inférieur du profil (26).

10. Procédé modulaire pour fabriquer et assembler une structure de véhicule automoteur pour le transport de passagers et chargement, selon la revendication 1, **caractérisé en ce qu'**il comprend une fenêtre (28), formée par une structure de profils latéraux (29), supérieurs (30) et inférieurs (31), unis au moyen de composants structuraux, avec des formes similaires à la lettre "L" (35) et avec des formes similaires à la lettre "T" (34), pourvus de bords (33) de finissage.

11. Procédé modulaire pour fabriquer et assembler une structure de véhicule automoteur pour le transport de passagers et chargement selon la revendication 1, **caractérisé en ce qu'**il comprend un châssis (5) pourvu d'éléments (16) transversaux tripartites, avec des rainures (17) sur son extrémité supérieure, et un amortisseur (18).
